# EUROPÄISCHE PATENTSCHRIFT

(11) **EP 3 071 834 B1**
(45) Veröffentlichungstag und Bekanntmachung des Hinweises auf die Patenterteilung: **10.07.2024**
(21) Anmeldenummer: 14793108.3
(22) Anmeldetag: 03.11.2014
(51) Int. Cl.: F04B 17/04, F25B 1/00, F04B 39/06, F25B 31/00

(54) **KÜHLKREISLAUF**
COOLING CIRCUIT
CIRCUIT DE REFROIDISSEMENT

(30) Priorität: 18.11.2013 DE 102013112670
(43) Veröffentlichungstag der Anmeldung: 28.09.2016
(73) Patentinhaber: BITZER Kühlmaschinenbau GmbH, 71065 Sindelfingen (DE)
(72) Erfinder: PFAFFL, Julian, 72070 Tübingen (DE); OHSER, Klaus, 04509 Wiedemar OT Kyhna (DE)
(74) Vertreter: Hoeger, Stellrecht & Partner Patentanwälte mbB
(86) Internationale Anmeldenummer: PCT/EP2014/073575
(87) Internationale Veröffentlichungsnummer: WO 2015/071128

(56) Entgegenhaltungen:
- EP-A1- 1 719 960
- US-A1- 2011 203 304

## Beschreibung

Die Erfindung betrifft einen Kühlkreislauf umfassend einen Kältemittelverdichter mit einem Sauganschluss und mit einer einen Druckanschluss aufweisenden Druckkammer, einen im Kühlkreislauf auf den Druckanschluss folgend angeordneten Verflüssiger mit einem Fluidsammelraum, in welchem sich ein Kältemittelvorrat bildet, einen im Kühlkreislauf zwischen dem Verflüssiger und dem Sauganschluss liegenden Verdampfer, eine einerseits mit dem Kältemittelvorrat und andererseits mit der Druckkammer verbundene Zufuhreinheit zur Zufuhr von Kältemittel aus dem Kältemittelvorrat zu der Druckkammer, welche eine Pumpeinheit für das Kältemittel umfasst. Derartige Kühlkreisläufe sind aus dem Stand der Technik, beispielsweise der

DE 43 38 939 C1, bekannt. US 2011/203304 A1 offenbart einen Kühlkreislauf gemäß dem Oberbegriff des Anspruchs 1.

Bei diesen bekannten Kühlkreisläufen waren jedoch bei der Zufuhreinheit aufwändige Pumpeinheiten vorgesehen, die zu wirtschaftlich nicht realisierbaren Lösungen geführt haben.

Der Erfindung liegt daher die Aufgabe zugrunde, einen Kühlkreislauf der gattungsgemäßen Art derart zu verbessern, dass dieser wirtschaftlich sinnvoll realisierbar ist.

Diese Aufgabe wird durch einen Kühlkreislauf gemäß dem unabhängigen Anspruch 1 gelöst.

Der Vorteil der erfindungsgemäßen Lösung ist darin zu sehen, dass damit die Möglichkeit besteht, einfach aufgebaute Pumpen mit einer für die erfindungsgemäße Anwendung ausreichenden geringen Förderleistung einzusetzen, die eine geringe, dauerhaft geschlossenen Anlagen entsprechende Leckrate für das unter Druck stehende Kältemittel aufweisen, kostengünstig herstellbar und kostengünstig betreibbar sind.

Eine derartige geringe, dauerhaft geschlossenen Anlagen entsprechende Leckrate liegt bei einem Druck von mindestens 0,25 mal dem maximal zulässigen Druck bei 3 g/Jahr oder weniger pro Verbindung.

Mit der erfindungsgemäßen Lösung lässt sich somit ein gattungsgemäß beschriebener Kühlkreislauf effizient betreiben.

Im Rahmen der vorliegenden Erfindung erfolgt in einem Verflüssiger bei unterkritischer Betriebsweise eine Verflüssigung des Kältemittels, wie dies bei den üblichen kommerziell eingesetzten Kältemitteln der Fall ist, jedoch bei überkritischer Betriebsweise nur eine Kühlung des Kältemittels ohne dass dieses verflüssigt wird.

Somit sammelt sich bei unterkritischer Betriebsweise in Fluidsammelraum flüssiges Kältemittel, jedoch bei überkritischer Betriebsweise gekühltes gasförmiges Kältemittel.

Erfindungsgemäß ist es dabei, wenn die Pumpkammer in einem druckdicht abgeschlossenen Pumpkammergehäuse angeordnet ist.

Bei einer derartigen Lösung ist somit unmittelbar die Pumpkammer in einem druckdichten Gehäuse angeordnet.

Ferner ist erfindungsgemäß bei dieser Lösung vorgesehen, dass das Pumpelement über eine durch das Pumpkammergehäuse hindurch wirkende elektromagnetische oder magnetische Kraftwirkung angetrieben ist.

Eine derartige Lösung ist vorteilhaft, da das Pumpkammergehäuse ein geringes Volumen aufweisen kann und somit dieses geringe Volumen in einfacher Weise und mit einfachen Mitteln druckdicht abgeschlossen werden kann, so dass dadurch die konstruktive Realisierung der erfindungsgemäßen Lösung hinsichtlich des Kostenaufwandes besonders einfach ist.

Unter einem druckdichten Abschluss in Sinne der erfindungsgemäßen Lösung ist dabei zu verstehen, dass dies ein Abschluss ist, der frei von einer mechanischen Antriebsdurchführung für das Pumpelement ausgebildet ist, das heißt, dass alle im Bereich einer mechanischen Antriebsdurchführung erforderlichen aufwändigen Abdichtmaßnahmen, die dennoch bei den erforderlichen Drücken von beispielsweise mehr als 15 bar, vorzugsweise mehr als 20 bar, noch besser mehr als 25 bar, zu Leckagen führen, vermieden werden kann.

Hinsichtlich der Ausbildung des Pumpelements sind die unterschiedlichsten Möglichkeiten denkbar.

Eine besonders einfach und kostengünstig realisierbare Lösung sieht dabei vor, dass das Pumpelement als Kolben ausgebildet ist.

Ein derartiger Kolben könnte beispielsweise ein konventioneller Kolben einer Kolbenpumpe sein. Eine besonders einfache und zweckmäßige Lösung sieht jedoch vor, dass der Kolben als federbeaufschlagter Schwingkolben ausgebildet ist und sich somit aufgrund seiner Federbeaufschlagung oszillierend bewegen kann.

Insbesondere lässt sich ein derartiger Schwingkolben einfach durch eine Magnetspule oszillierend antreiben.

Eine alternative Lösung hierzu sieht vor, dass das Pumpelement als um eine Achse rotierendes Pumpelement ausgebildet ist und somit insbesondere auch rotierend angetrieben ist.

Ein derartiges rotierendes Pumpelement lässt eine Vielzahl von einfachen Realisierungsformen für Pumpen mit rotierendem Pumpelement zu.

Beispielsweise ist dabei vorgesehen, dass das rotierende Pumpelement ein Zahnrad eines Zahnradsatzes einer Zahnradpumpe ist.

Eine besonders günstige Lösung sieht vor, dass die Pumpeinheit durch eine Kältemittelzufuhrsteuereinheit angesteuert ist.

Mit der Kältemittelzufuhrsteuereinheit besteht nicht nur die Möglichkeit das Einschalten und Ausschalten der Pumpeinheit zu steuern, sondern auch die Möglichkeit, über eine Steuerung der Fördermenge der Pumpeinheit die Kühlung der Druckkammer zu steuern und somit die Temperatur der Drucckammer zu regeln, um die Temperatur im Bereich um einen vorgegebenen Schwellwert zu halten.

Alternativ oder ergänzend zu der eingangs beschriebenen erfindungsgemäßen Lösung sieht eine weitere Lösung der eingangs genannten Aufgabe vor, dass der Pumpeinheit eine Gasabfuhreinheit zugeordnet ist, welche eine gasförmiges Kältemittel aus der Zufuhreinheit abführende Gasabfuhrleitung aufweist.

Der Vorteil dieser Lösung ist darin zu sehen, dass damit die Möglichkeit besteht, ein sich im Bereich der Pumpeinheit, insbesondere ein sich einlassseitig der Pumpeinheit während Abschaltperioden bildendes Gaspolster aus Kältemittel zu entfernen, welches bei Pumpeinheiten mit kleiner Förderleistung dazu führt, dass diese zumindest erst nach langer Anlaufzeit flüssiges Kältemittel fördern oder nur zeitweise flüssiges Kältemittel fördern oder gar kein flüssiges Kältemittel während der vorgesehenen Laufzeit fördern, da bei einmaliger Gasbildung des Kältemittels einlassseitig der Pumpeinheit die geringe Fördermenge der Pumpeinheit nicht ausreicht, um das sich durch Wärmeeintrag gebildete Gas schnell genug weg zu fördern, so dass schließlich die Pumpeinheit nicht in der Lage ist, zuverlässig flüssiges Kältemittel zu fördern, was für die erfindungsgemäße Lösung essentiell ist, denn die vorgesehenen geringen Fördermengen der erfindungsgemäßen Pumpeinheit führen nur dann zu einer sinnvollen Kühlung in der Druckkammer, wenn diese flüssiges Kältemittel fördern, das dann in der Druckkammer verdampfen und somit Wärme aufnehmen kann.

Beispielsweise könnte dabei die Gasabfuhrleitung zu einem Kältemittelpfad auf einem Zwischendruckniveau, beispielsweise zu einen Zwischendruckanschluss des Verdichters, führen.

Eine besonders zweckmäßige Lösung sieht vor, dass die Gasabfuhrleitung in einen auf saugseitigem Druck liegenden Kältemittelpfad des Kühlkreislaufs einmündet, so dass eine große Druckdifferenz zur Abfuhr des gasförmigen Kältemittels aus der Zufuhreinheit zur Verfügung steht und somit dieses rasch entfernt werden kann.

Unter dem auf saugseitigem Druck liegenden Kältemittelpfad des Kühlkreislaufs ist dabei der gesamte sich vom Verdampfer bis zur Saugkammer des Verdichters verlaufende Kältemittelpfad zu verstehen.

Besonders günstig ist es, wenn die Gasabfuhrleitung vor dem Sauganschluss des Verdichters in den auf saugseitigem Druck liegenden Kältemittelpfad einmündet, um im Fall von über die Gasabfuhrleitung diesem Kältemittelpfad zugeführtem flüssigem Kältemittel die Möglichkeit zu geben, bis zum Erreichen der Saugkammer zu verdampfen.

Insbesondere ist es günstig, wenn der auf saugseitigem Druck liegende Kältemittelpfad ausgehend vom Sauganschluss des Verdichters in dem Verdichtergehäuse durch einen Motorraum des Verdichters verläuft, um diesen zu kühlen, so dass bei Einmünden der Gasabfuhrleitung vor dem Motorraum oder in den Motorraum ein Verdampfen von gegebenenfalls zugeführtem flüssigen Kältemittel gefördert werden kann.

Eine zweckmäßige Lösung sieht ferner vor, dass die Gasabfuhreinheit mit einem zum Einlass der Pumpeinheit führenden Zuleitungsabschnitt der Zufuhreinheit verbunden ist.

Die Zufuhr von Kältemittel über die Gasabfuhrleitung zu dem auf saugseitigem Druck liegenden Kältemittelpfad kann aber auch gezielt zur Kühlung des Verdichters eingesetzt werden.

Hierzu ist vorzugsweise in der Gasabfuhrleitung, beispielsweise vor deren Einmündung in den auf saugseitigem Druck liegenden Kältemittelpfad, eine Drossel oder eine Expansionseinheit vorgesehen, welche das Kältemittel vor oder bei Eintritt in den auf saugseitigem Druck liegenden Kältemittelpfad entspannt und dadurch abkühlt, so dass dem Verdichter dieses gekühlte Kältemittel saugseitig zugeführt werden kann.

Eine andere vorteilhafte Lösung sieht vor, dass die Gasabfuhreinheit mit einem zur Druckkammer führenden Ableitungsabschnitt der Zufuhreinheit verbunden ist.

Eine besonders zweckmäßige Lösung sieht vor, dass die Gasabfuhreinheit mit einem Einlass der Pumpeinheit und/oder einem Auslass der Pumpeinheit verbunden ist, um die Möglichkeit zu haben, die Pumpeinheit möglichst vor einem Anlaufen oder unmittelbar nach einem Anlaufen derselben mit flüssigem Kältemittel zu versorgen, so dass diese flüssiges Kältemittel zur Druckkammer fördert.

Um die Gasabfuhreinheit aktivieren und deaktivieren zu können, ist vorzugsweise vorgesehen, dass der Gasabfuhreinheit ein Schaltventil zugeordnet ist, welches insbesondere in der Gasabfuhrleitung vorgesehen ist.

Vorzugsweise ist dabei das Schaltventil durch eine Kältemittelzufuhrsteuereinheit derart steuerbar, dass mit diesem entweder vor oder bei einem Einschalten der Pumpeinheit die Gasabfuhreinheit aktiviert wird und zunächst, beispielsweise während eines festlegbaren Zeitraums, gasförmiges Kältemittel und gegebenenfalls nachlaufendes flüssiges Kältemittel so lange abführt, bis an der Pumpeinheit flüssiges Kältemittel zum Fördern desselben zur Drucckammer anliegt.

Eine Zeitdauer wird dabei beispielsweise so gewählt, dass an einem Ende dieses Zeitraums in allen Betriebszuständen des Kühlkreislaufs sichergestellt ist, dass am Einlass der Pumpeinheit flüssiges Kältemittel ansteht.

Eine weitere vorteilhafte Lösung, die die Zufuhr von flüssigem Kältemittel in den saugdruckseitigen Kältemittelpfad reduziert, sieht vor, dass die Zeitdauer entsprechend vorliegenden Betriebszuständen des Kühlkreislaufs variabel einstellbar ist, wobei die Betriebszustände des Kühlkreislaufs durch Sensoren, beispielsweise Temperatur- und/oder Drucksensoren, erfasst werden.

Alternativ dazu besteht aber auch die Möglichkeit, beispielsweise über einen Flüssigkeitssensor, in dem Zuleitungsabschnitt und/oder in dem Ableitungsabschnitt und/oder in der Gasabfuhreinheit zu erkennen, ob bereits flüssiges Kältemittel vorliegt, und dann, wenn dies der Fall ist, die Gasabfuhreinheit zu deaktivieren.

Die Führung von flüssigem Kältemittel in der Gasabfuhrleitung lässt sich alternativ oder ergänzend zu der vorstehend beschriebenen Vorgehensweise auch dadurch erfassen, dass in der Gasabfuhrleitung eine Drossel vorgesehen ist, bei deren Durchströmung die Temperatur des Kältemittels aufgrund der Expansion reduziert wird und diese Reduktion der Temperatur ist durch einen Sensor stromabwärts der Drossel und/oder einem Sensor stromaufwärts der Drossel erfassbar, so dass bei Auftreten einer der Expansion von flüssigem Kältemittel entsprechenden Reduktion der Temperatur die Gasabfuhreinheit deaktiviert wird.

Ferner betrifft die Erfindung ein Verfahren zum Betreiben eines Kühlkreislaufs umfassend einen Kältemittelverdichter mit einem Sauganschluss und mit einer einen Druckanschluss aufweisenden Druckkammer, einen im Kühlkreislauf auf den Druckanschluss folgend angeordneten Verflüssiger mit einem Fluidsammelraum, in welchem sich ein Kältemittelvorrat aus Kältemittel bildet, einen im Kühlkreislauf zwischen dem Verflüssiger und dem Sauganschluss liegenden Verdampfer, eine einerseits mit dem Kältemittelvorrat und andererseits mit der Druckkammer verbundene Zufuhreinheit zur Zufuhr von Kältemittel aus dem Kältemittelvorrat zu der Druckkammer, welche eine Pumpeinheit für das Kältemittel umfasst, bei welchen mittels der Zufuhreinheit der Druckkammer Kältemittel zur Kühlung zugeführt wird, wobei aus der Zufuhreinheit mittels einer Gasabfuhreinheit gasförmiges Kältemittel abgeführt wird.

Weitere Merkmale der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels eines erfindungsgemäßen Kühlkreislaufs;
- Fig. 2: eine schematische Darstellung ähnlich Fig. 1 eines zweiten Ausführungsbeispiels eines erfindungsgemäßen Kühlkreislaufs;
- Fig. 3: eine schematische Darstellung eines ersten Ausführungsbeispiels einer erfindungsgemäß vorgesehenen Pumpeinheit;
- Fig. 4: eine schematische Darstellung eines zweiten Ausführungsbeispiels einer erfindungsgemäßen Pumpeinheit und
- Fig. 5: eine schematische Darstellung einer Variante des zweiten Ausführungsbeispiels der erfindungsgemäßen Pumpeinheit.

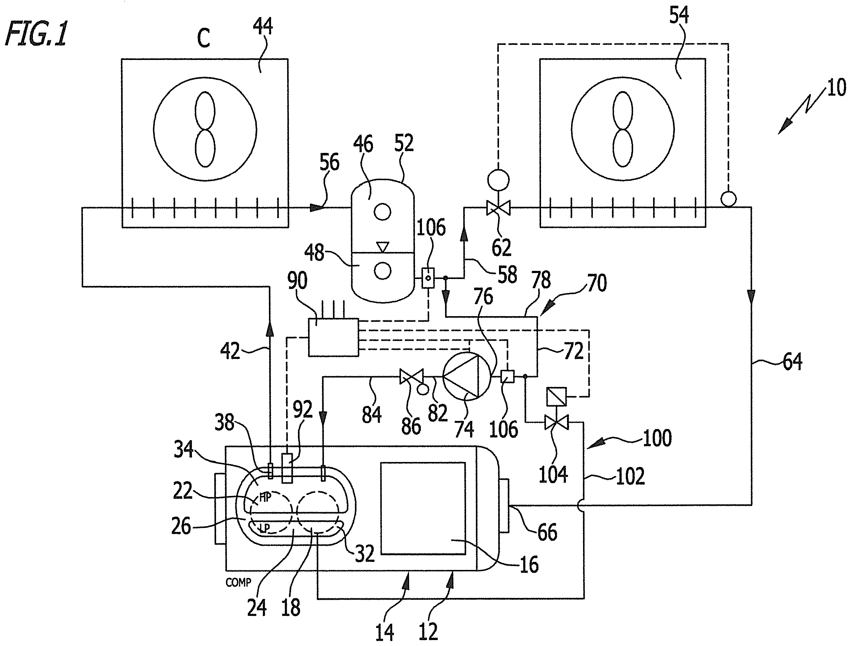

Ein in Fig. 1 dargestelltes erstes Ausführungsbeispiel eines erfindungsgemäßen Kühlkreislaufs 10 mit einem zirkulierenden Kältemittel umfasst einen als Ganzes mit 12 bezeichneten Verdichter für das Kältemittel, welcher beispielsweise als Kolbenverdichter ausgebildet sein kann.

Der Verdichter 12 kann aber auch als Scroll-Verdichter Rollkolbenverdichter, Flügelzellenverdichter oder als Schraubenverdichter ausgeführt sein.

Im Fall eines Kolbenverdichters 12 sind in einem Verdichtergehäuse 14 ein Antriebsmotor 16 angeordnet, welcher Kolben 18 von einem oder mehreren Zylindern 22 antreibt, die in einem Zylinderblock 24 des Verdichtergehäuses 14 angeordnet sind und die durch mindestens einen Zylinderkopf 26 abgeschlossen sind, wobei der mindestens eine Zylinderkopf 26 eine Saugkammer 32 und eine Druckkammer 34 aufweist, wobei der Saugkammer 32 anzusaugendes Kältemittel zugeführt wird, von dieser dem einen oder den mehreren Zylindern 22 zugeführt wird und dann von den Zylindern 22 verdichtet in die Druckkammer 34 abgegeben wird.

Die Druckkammer 34 ist mit einem Druckanschluss 38 für verdichtetes Kältemittel versehen und von dem Druckanschluss 38 führt eine Druckleitung 42 zu einem Verflüssiger 44, welcher das unter Druck stehende Kältemittel im Fall einer unterkritischer Betriebsweise verflüssigt, im Fall einer überkritischen Betriebsweise kühlt, und einem Fluidsammelraum 46 zuführt, in welchem sich ein Kältemittelvorrat 48 aus Kältemittel, bei unterkritischer Betriebsweise flüssigem Kältemittel, bildet.

Der Fluidsammelraum 46 kann dabei in den Verflüssiger 44 integriert sein. Der Fluidsammelraum 46 kann jedoch aber auch, wie in Fig. 1 dargestellt, in einem diesen bildenden Sammelbehälter 52 angeordnet sein, der im Kältemittelkreislauf 10 zwischen dem Verflüssiger 44 und einem Verdampfer 54 angeordnet ist.

Der Fluidsammelraum kann aber auch in einer entsprechenden dem notwendigen Volumen aufgeweiteten Zuleitung zum Verdampfer 54 angeordnet sein.

Beispielsweise führt von dem Verflüssiger 44 eine Zuleitung 56 zum Sammelbehälter 52, um diesem das verflüssigte Kältemittel zuzuführen und vom Sammelbehälter 52 führt eine Verdampferzuleitung 58 zum Verdampfer 54, wobei die Verdampferzuleitung 58 so relativ zum Fluidsammelraum 46 angeordnet ist, dass sie flüssiges Kältemittel aus dem Kältemittelvorrat 48 aufnimmt und kein dampfförmiges Kältemittel.

Der Verdampfer 54 ist seinerseits noch mit einem Steuerventil 62 versehen, welches den Zustrom von Kältemittel zu dem Verdampfer 54 steuert, wobei das Kältemittel dann bei unterkritischer Betriebsweise im Verdampfer 54 als flüssiges Kältemittel unter vorgebbaren Druckverhältnissen verdampft und sich bei überkritischer Betriebsweise durch die Expansion abkühlt und dabei jeweils Wärme aufnimmt.

Das im Verdampfer 54 verdampfte Kältemittel wird dann von einer auf Saugdruck liegenden Saugleitung 64 des Kältemittelkreislaufs 10 wiederum zurück zum Verdichter 12 geführt, wobei beispielsweise ein Sauganschluss 66 des Verdichters 12 so angeordnet ist, dass das aus der Saugleitung 64 kommende verdampfte Kältemittel zunächst einen saugseitig angeordneten Antriebsmotor 16 umströmt, diesen kühlt und dann in die Saugkammer 32 des Zylinderkopfes 26 eintritt.

Da insbesondere Kältemittel mit hohem Verdichtungsexponent, wie beispielsweise die Kältemittel R407A, R407F, CO₂, NH₃, hohe Verdichtungsendtemperaturen erreichen, tritt bei größeren Druckverhältnissen eine erhebliche Aufheizung der Zylinder 22 und des Zylinderkopfes 26, insbesondere im Bereich der Druckkammer 34 auf, die dann insgesamt zu einer Aufheizung des Verdichtergehäuses 14 führt, so dass die Effizienz des Verdichters 12 durch Wärmeübertragungsverluste beeinträchtigt ist.

Die Aufheizung im Bereich der Druckkammer kann auch zu einer chemischen Zersetzung von mit dem Kältemittelmassenstrom geförderten Schmiermittel und dadurch als Folge zum Ausfall des Verdichters und zur Kontamination des Systems führen.

Aus diesem Grund ist eine als Ganzes mit 70 bezeichnete Zufuhreinheit zur Zufuhr von flüssigem Kältemittel aus dem Kältemittelvorrat 48 in die Drucckammer 34 des mindestens einen Zylinderkopfes 26 vorgesehen, so dass durch ein Verdampfen des zugeführten flüssigen Kältemittels in der Drucckammer 34 eine Kühlung der Druckkammer 34 erreicht wird.

Die Zufuhreinheit 70 umfasst dabei eine Zufuhrleitung 72, welche entweder direkt in das Kältemittelvorrat 48 mündet oder von der Verdampferzuleitung 58 abzweigt und in die Druckkammer 34 des mindestens einen Zylinderkopfes 26 einmündet.

Da jedoch der Druck in dem Fluidsammelraum 46 aufgrund von Druckverlusten in der Druckleitung 42 und im Verflüssiger 44, beispielsweise bei dem Kältemittel R407A und R407F oder Kältemitteln ähnlicher Drucklage, im Bereich zwischen 0,5 und 5 bar niedriger ist als der Druck in der Druckkammer 34, und bei Hochdruckkältemitteln, wie zum Beispiel CO₂ noch niedriger ist, ist in der Zufuhrleitung 72 eine Pumpeinheit 74 für flüssiges Kältemittel vorgesehen, die das flüssige Kältemittel von dem Druckniveau im Fluidsammelraum 46 mindestens geringfügig über das Druckniveau in der Druckkammer 34 oder maximal 5 bar über das Druckniveau der Druckkammer anhebt und außerdem ist in der Zufuhrleitung 72 zwischen der Pumpeinheit 74 und der Einmündung derselben in die Druckkammer 34 ein Rückschlagventil 86 vorgesehen, welches ein Ausschalten der Pumpeinheit 74 zu jedem gewünschten Zeitpunkt zulässt.

Die Pumpeinheit 74 umfasst dabei einen Einlass 76, welcher mit einem Zuleitungsabschnitt 78 der Zufuhrleitung 72 verbunden ist, sowie einen Auslass 82, welcher mit einem Ableitungsabschnitt 84 der Zufuhrleitung 72 verbunden ist, wobei der Ableitungsabschnitt 84 von dem Auslass 82 zu der Druckkammer 34 führt.

In dem Ableitungsabschnitt 84 ist insbesondere ein Rückschlageventil 86 angeordnet, welches es erlaubt, die Pumpeinheit 74 auszuschalten, wenn keine hohen über einem Sollwert liegenden Temperaturen in der Drucckammer 34 auftreten und nur dann einzuschalten, wenn über einem Sollwert liegenden Temperaturen in der Druckkammer 34 des Zylinderkopfes 26 auftreten.

Um die Pumpeinheit 74 zu betreiben, ist eine Kältemittelzufuhrsteuereinheit 90 vorgesehen, welche mittels eines Temperatursensors 92 die Temperatur in der Druckkammer 34 oder in einem an die Druckkammer 34 angrenzenden Bereich des mindestens einen Zylinderkopfes 26 erfasst und dann stets die Pumpeinheit 74 einschaltet, wenn die Temperatur in der Druckkammer 34 oder im an die Druckkammer 34 angrenzenden Bereich des Zylinderkopfes 26 einen vorgebbaren Schwellwert überschreitet, so dass nur bei einem Überschreiten des Schwellwerts eine Zufuhr von Kältemittel bei unter kritischem Betrieb in die Druckkammer 34 erfolgt, das dann in der Druckkammer 34 verdampft und hierbei Wärme aufnimmt und somit das in der Druckkammer 34 vorliegende gasförmige Kältemittel sowie die Zylinder 22 und das Verdichtergehäuse 14 kühlt.

Im Fall eines druckseitig angeordneten Antriebsmotors des Verdichters ist durch das zugeführte flüssige Kältemittel auch eine Kühlung des Antriebsmotors möglich, wenn das aus der Druckkammer 34 austretende Kältemittel diesen umströmt.

Der Schwellwert liegt beispielsweise im Bereich von 80°C bis 150°C, vorzugsweise im Bereich von 110°C bis 130°C, insbesondere im Bereich zwischen 115°C und 125°C.

Ferner ist vorzugsweise eine Sicherheitsabschaltung vorgesehen, die bei einem Überschreiten einer Maximaltemperatur in der Druckkammer 34 den Verdichter 12 abschaltet, wobei die Maximaltemperatur im Bereich von 130°C bis 150°C, vorzugsweise im Bereich von 135°C bis 145°C liegt.

Um ferner sicherzustellen, dass der Schwellwert nicht signifikant überschritten wird, steuert die Kältemittelzufuhrsteuereinheit 90 die Pumpeinheit 74 so, dass eine Regelung einer Fördermenge der Pumpeinheit 74 erfolgt, wobei die Pumpeinheit 74 so ausgelegt ist, dass eine maximale Fördermenge derselben bei den vorgesehenen Einsatzzuständen ausreichend ist, um ein dauerhaftes Überschreiten des Schwellwerts zu verhindern.

Das zusätzlich in die Druckkammer 34 über die Zufuhrleitung 72 zugeführte Kältemittel strömt dann über die Druckleitung 42 zusätzlich zu dem durch den mindestens einen Zylinder 22 verdichteten Kältemittel zum Verflüssiger 44, und wird von diesem verflüssigt.

Die Zufuhr von Kältemittel in der Druckkammer 34 insbesondere erfolgt so lange, bis die von dem Temperatursensor 92 gemessene Temperatur wieder unter den Schwellwert absinkt.

Um sicher zu stellen, dass die Pumpeinheit 74 im Wesentlichen nur flüssiges Kältemittel fördert, ist der Zufuhrleitung 72 eine Gasabfuhreinheit 100 zugeordnet, welche bei dem in Fig. 1 dargestellten ersten Ausführungsbeispiel eine von dem Zuleitungsabschnitt 78 abzweigende Gasabfuhrleitung 102 umfasst, welche in den Kühlkreislauf 10 zwischen dem Verdampfer 54 und dem mindestens einen Zylinder 22 einmünden kann, der einen auf Saugdruck liegenden Strömungspfad des Kältemittels darstellt.

Das heißt, die Gasabfuhrleitung 102 kann beispielsweise in die Saugleitung 64 oder in den Sauganschluss 66 einmünden oder im Verdichtergehäuse 14 in den in diesen verlaufenden Strömungspfad des angesaugten und zur Saugkammer 32 strömenden Kältemittels einmünden oder auch direkt in die Saugkammer 32 einmünden, wie dies in Fig. 1 dargestellt ist.

Zur Aktivierung der Gasabfuhrleitung 102 ist in dieser ein Gasabfuhrventil 104 vorgesehen, welches durch die Kältemittelzufuhrsteuereinheit 90 steuerbar ist.

Beispielsweise erfolgt ein Aktivieren der Gasabfuhrleitung 102 durch Öffnen des Gasabfuhrventils 104 beim oder vor einem Einschalten der Pumpeinheit 74, so dass aufgrund des großen Druckgefälles zwischen dem Druck im Zuleitungsabschnitt 78 der Zufuhrleitung 72 und dem Saugdruck des Verdichters 12 das sich in dem Zuleitungsabschnitt 78 durch Erwärmung bei abgeschalteter Pumpeinheit 74 angesammelte Gas über die Gasabfuhrleitung 102 dem Verdichter 12 saugseitig zugeführt wird und dadurch flüssiges Kältemittel aus dem Kältemittelvorrat 48 in die Zufuhrleitung 72 nachströmt.

Wenn flüssiges Kältemittel am Einlass 76 der Pumpeinheit 74 zur Verfügung steht, kann die Kältemittelzufuhrsteuereinheit 90 das Gasabfuhrventil 104 schließen und somit die Gasabfuhrleitung 102 deaktivieren, da dann die Pumpeinheit 74 das an deren Einlass 76 anstehende flüssige Kältemittel fördern und auf ein Druckniveau bringen kann, so dass dieses in die Drucckammer 34 des mindestens einen Zylinderkopfes 26 einströmt, um in der Druckkammer 34 zu verdampfen und somit - wie beschrieben - in der Drucckammer 34 zu kühlen.

Das Vorliegen von flüssigem Kältemittel am Einlass 76 der Pumpeinheit 74 kann in unterschiedlichster Art und Weise sichergestellt werden.

Eine erste Möglichkeit sieht vor, das Gasabfuhrventil 204 für einen hinsichtlich seiner Zeitdauer definierbaren Zeitraum zu öffnen, wobei die Zeitdauer so bemessen wird, dass bei allen üblichen Betriebszuständen am Ende des Zeitraums mit Sicherheit flüssiges Kältemittel am Einlass 76 der Pumpeinheit 74 zur Verfügung steht.

Dabei kann die Zeitdauer gemäß der bei allen möglichen Betriebszuständen maximal notwendigen Zeitdauer festgelegt sein.

Es ist aber auch möglich die auftretende Betriebszustände durch Sensoren, wie beispielsweise Sensoren für die Umgebungstemperatur und/oder Sensoren für die Temperaturen im Verdampfer und/oder Drucksensoren, an unterschiedlichen Stellen des Kühlkreislaufs zu erfassen und die Zeitdauer entsprechend den jeweils erfassten Betriebszuständen variabel vorzugeben.

Eine zweite Möglichkeit sieht vor, das Vorliegen von flüssigem Kältemittel durch mindestens einen Flüssigkeitssensor 106 zu erfassen. Dieser Flüssigkeitssensor 106 kann dabei in dem Zuleitungsabschnitt 78, beispielsweise unmittelbar vor dem Einlass 76 der Pumpeinheit 74 und/oder in der Gasabfuhrleitung 102, zum Beispiel an der Abzweigung von dem Zuleitungsabschnitt 78 und/oder der Einmündung in den auf saugseitigem Druck liegendem Kältemittelpfad angeordnet sein.

Sobald die Temperatur in der Druckkammer 34 oder in dem an die Drucckammer 34 angrenzenden Teil des Zylinderkopfes 26 wieder soweit abgesunken ist, dass sie unter dem Schwellwert liegt, schaltet die Kältemittelzufuhrsteuereinheit 90 die Pumpeinheit 74 ab, so dass die Zufuhreinheit 70 solange inaktiv ist, bis wiederum der Schwellwert für die Temperatur in der Druckkammer 34 oder dem an die Druckkammer 34 angrenzenden Teil des Zylinderkopfes 26 überschritten hat.

Bei dem ersten Ausführungsbeispiel zweigt die Gasabfuhrleitung 102 von dem Zuleitungsabschnitt 78 der Zufuhrleitung 72 möglichst unmittelbar vor dem Einlass 76, vorzugsweise am Einlass 76, ab, um sämtliches Gas aus dem Zuleitungsabschnitt 78 vor dem Einlass 76 der Pumpeinheit 74 abzuführen, so dass die Pumpeinheit 74 möglichst wenig oder möglichst kein gasförmiges Kältemittel ansaugt, sondern, wenn sie eingeschaltet wird, unmittelbar flüssiges Kältemittel fördern kann.

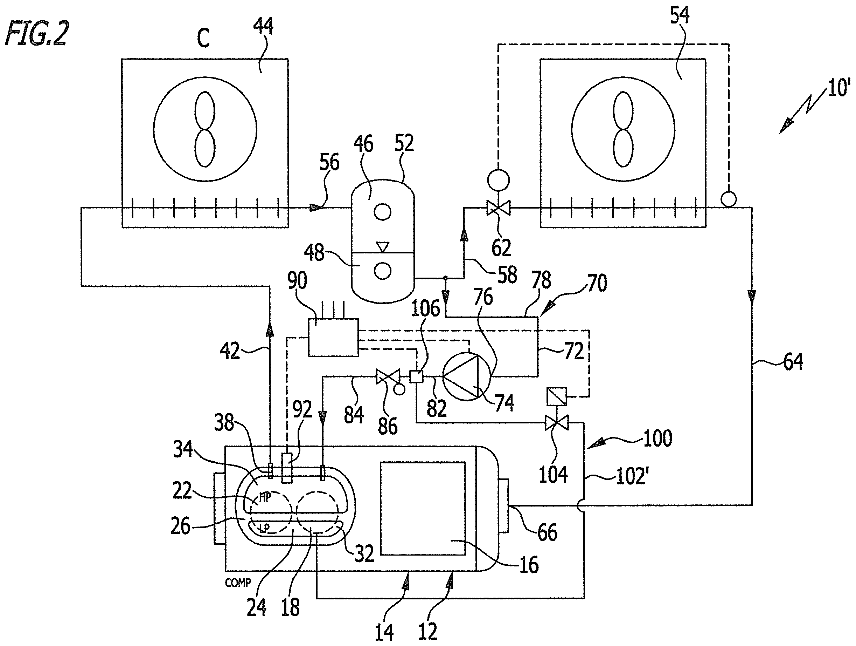

Alternativ hierzu ist bei einem zweiten in Fig. 2 dargestellten Ausführungsbeispiel eines erfindungsgemäßen Kühlkreislaufs 10' vorgesehen, dass die Gasabfuhrleitung 102' von dem Druckanschluss 38 oder von der Zufuhrleitung 72 abzweigt, beispielsweise zwischen dem Auslass 82 der Pumpeinheit 74 und dem Rückschlagventil 86 in dem Ableitungsabschnitt 84, so dass bei Aktivieren der Gasabfuhrleitung 102 durch die Pumpeinheit 74 hindurch ein Druckgefälle anliegt, das ein sicheres Fluten der Pumpeinheit 74 mit flüssigem Kältemittel zulässt, so dass nach Deaktivieren der Gasabfuhrleitung 102 durch Schließen des Gasabfuhrventils 104 die Pumpeinheit 74 insgesamt mit flüssigem Kältemittel geflutet ist und somit unmittelbar beginnt, flüssiges Kältemittel zu pumpen.

Dabei verhindert das Rückschlagventil 86, dass sich das Abführen des gasförmigen Kältemittels auf den Druck in der Druckkammer 34 negativ auswirkt.

Diese Lösung ist insbesondere dann attraktiv, wenn die Pumpeinheit 74 so aufgebaut ist, dass ein durch diese hindurch bestehender Druckgradient in Pumprichtung die Förderung von gasförmigen Kältemittel unterstützen kann.

Im Übrigen ist das zweite Ausführungsbeispiel des erfindungsgemäßen Kühlkreislaufs gemäß Fig. 2 in gleicher Weise ausgebildet wie das erste Ausführungsbeispiel, so dass dieselben Teile mit denselben Bezugszeichen versehen sind und hinsichtlich der Beschreibung derselben vollinhaltlich auf die Ausführungen zum ersten Ausführungsbeispiel Bezug genommen werden kann.

Hinsichtlich der Ausbildung der Pumpeinheit 74 wurden bislang keine näheren Angaben gemacht.

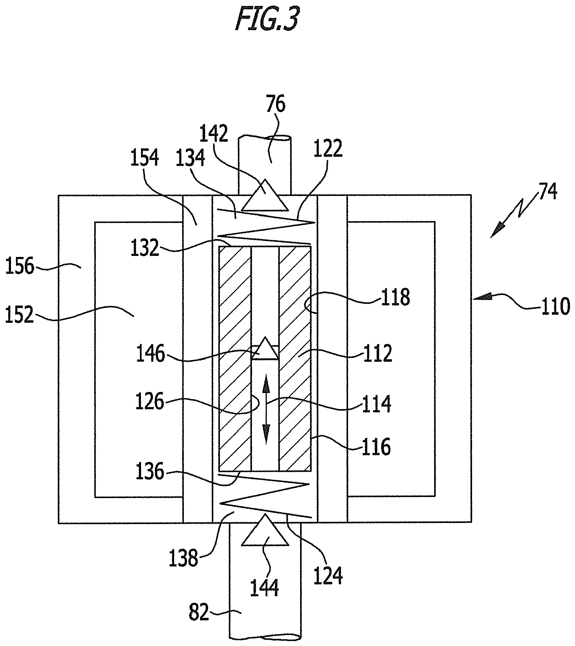

Ein erstes, in Fig. 3 dargestelltes Ausführungsbeispiel einer erfindungsgemäßen Pumpeinheit 74, ist als Kolbenpumpe 110 ausgebildet, welche einen Kolben 112 umfasst, der sich oszillierend linear in einer Oszillationsrichtung 114 bewegt.

Hierzu ist der Kolben 112 mit einer Kolbenmantelfläche 116 in einer Pumpkammer 118 in der Oszillationsrichtung 114 bewegbar geführt und beispielsweise zwischen zwei Federn 122 und 124 angeordnet, so dass der Kolben 112 durch Komprimierung einer der Federn 122, 124 und Entspannung der anderen der Federn 122, 124 sich in der Oszillationsrichtung 114 in der Pumpkammer 118 bewegen kann.

Beispielsweise ist der Kolben 112 mit einem Durchlass 126 versehen, so dass dieser von dem zu fördernden Medium durchströmt werden kann.

Ferner bildet sich zwischen einer ersten Stirnseite 132 des Kolbens 112 und dem Einlass 76 ein erstes variables Volumen 134 und zwischen einer zweiten Stirnseite 136 des Kolbens 112 und dem Auslass 82 ein zweites variables Volumen 138.

Außerdem ist zwischen dem Einlass 76 und dem ersten Volumen 134 ein Einlassventil 142 angeordnet, zwischen dem zweiten Volumen 138 und dem Auslass 82 ein Auslassventil 144 angeordnet und dem Kolben 112 ist noch ein Kolbenventil 146 zugeordnet, welches beispielsweise in dem Durchlass 126 angeordnet ist.

Bewegt sich der Kolben 112 so, dass das zweite Volumen 138 verkleinert wird, während das erste Volumen 134 vergrößert wird, so öffnet das Auslassventil 144 und das flüssige Kältemittel strömt aufgrund der Verkleinerung des zweiten Volumens 138 aus der Kolbenkammer aus. Gleichzeitig öffnet das Einlassventil 142, da sich das erste Volumen 134 vergrößert, so dass flüssiges Kältemittel vom Einlass 76 in die Pumpkammer 118 eintreten kann.

Hierbei bleibt das Kolbenventil 146 geschlossen.

Bewegt sich dann der Kolben 112 so, dass das erste Volumen 134 verkleinert und das zweite Volumen 138 vergrößert wird, so schließen sowohl das Einlassventil 142 als auch das Auslassventil 144, während das Kolbenventil 146 öffnet, und somit kann flüssiges Kältemittel von dem ersten Volumen 134 durch den Durchlass 126 hindurch in das zweite Volumen 138 überströmen, wobei das Kolbenventil 146 öffnet.

Die Bewegungen des Kolbens 112 in der Oszillationsrichtung 114 werden angeregt durch einen außerhalb der Pumpkammer 118 angeordneten Elektromagnet 152, der über sein Magnetfeld auf den Kolben 112 derart einwirkt, dass dieser sich in der Oszillationsrichtung 114 oszillierend bewegt.

Beispielsweise ist dies dadurch möglich, dass das Magnetfeld des Elektromagnets den Kolben 112 in Richtung einer Verkleinerung des zweiten Volumens 138 bewegt und ein Abschalten des Magnetfeldes des Elektromagneten 152 dazu führt, dass sich der Kolben 112 aufgrund der Federn 122 und 124 in Richtung einer Verkleinerung des ersten Volumens 134 bewegt, und eine erneute Wirkung des Elektromagneten 152 wieder zu einer Bewegung des Kolbens 112 in Richtung einer Verkleinerung des zweiten Volumens 138 führt.

Da die Kolbenpumpe 110 bei Drücken im Bereich über 15 bar, vorzugsweise im Bereich über 20 bar und noch besser im Bereich über 25 bar arbeitet, ist die Kolbenpumpe 110 so aufgebaut, dass ein die Pumpkammer 118 bildendes Pumpkammergehäuse 154 hermetisch dicht abgeschlossen ist und insbesondere hermetisch dicht abgeschlossen auch mit dem Einlass 76 und dem Auslass 82 verbunden ist, wobei in diesem Fall der Elektromagnet 152 nicht in einem hermetisch abgeschlossenen Gehäuse 156 angeordnet sein muss, sondern dessen Feldwirkung durch das Pumpkammergehäuse 154 hindurch auf den Kolben 112 wirkt.

Eine andere Lösung sieht vor, dass die Kolbenpumpe 110 ein das Pumpkammergehäuse 154 mit umfassendes Außengehäuse 156 aufweist, welches hermetisch dicht abgeschlossen ist und hermetisch dicht abgeschlossen mit dem Einlass 76 und dem Auslass 82 verbunden ist, wobei auch der Elektromagnet 152 innerhalb des Außengehäuses 156 auf einem Druckniveau liegt, welches über 15 bar, vorzugsweise über 20 bar und noch besser über 25 bar, liegt.

In beiden Fällen ist es somit möglich, das zu fördernde flüssige Kältemittel in einem Gehäuse zu halten, das dieses hermetisch umschließt und insbesondere frei von mechanischen Antriebsdurchführungen für den Kolben 112 ist.

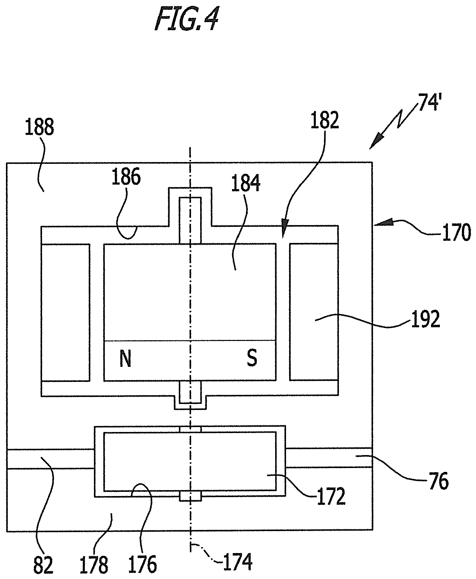

Ein zweites Ausführungsbeispiel einer erfindungsgemäßen Pumpeinheit 74' ist in Fig. 4 dargestellt. Diese Pumpeinheit ist als Rotationspumpe 170 ausgebildet, welche ein Pumpelement 172 aufweist, das um eine Achse 174 rotierend angetrieben ist.

Das Pumpelement 172 ist beispielsweise ein Zahnrad einer Zahnradpumpe, das mit einem weiteren in Fig. 4 nicht sichtbaren Zahnrad zusammenwirkt.

Hierbei wird flüssiges Kältemittel vom Einlass 76 zum Auslass 82 gefördert, wobei das Pumpelement 172 in einer Pumpkammer 176 angeordnet ist, welches sowohl mit dem Einlass 76 als auch mit dem Auslass 82 verbunden ist.

Die Pumpkammer 176 ist dabei in einem Pumpkammergehäuse 178 angeordnet, welches keinerlei mechanische Durchführung für einen Antrieb des Pumpelements 172 aufweist.

Vielmehr erfolgt der Antrieb des Pumpelements 172 über magnetische Kopplung zwischen einem Rotor 184 eines Antriebsmotors 182, wobei der Rotor 184 koaxial zum Pumpelement 172 in einem Innenraum 186 eines Motorgehäuses 188 angeordnet ist, das sich an das Pumpkammergehäuse 178 anschließt, so dass die magnetische Wechselwirkung zwischen dem Rotor 184 und dem Pumpelement 172 durch das Motorgehäuse 188 und das Pumpkammergehäuse 178 hindurch erfolgt.

In dem Innenraum des Motorgehäuses 188 ist ferner ein den Rotor 184 umschließender Stator 192 angeordnet, der die Drehbewegung des Rotors 184 bewirkt.

Bei diesem Ausführungsbeispiel, bei dem das Pumpelement 172 in der Pumpkammer 176 keinerlei mechanische Durchführung zum Antrieb des Pumpelements 172 aufweist, ist die Pumpkammer 176 ausschließlich mit dem Einlass 76 und dem Auslass 82 verbunden ist, während der Antrieb des Pumpelements 172 über eine magnetische Wechselwirkung zwischen diesem und dem Rotor 184 erfolgt.

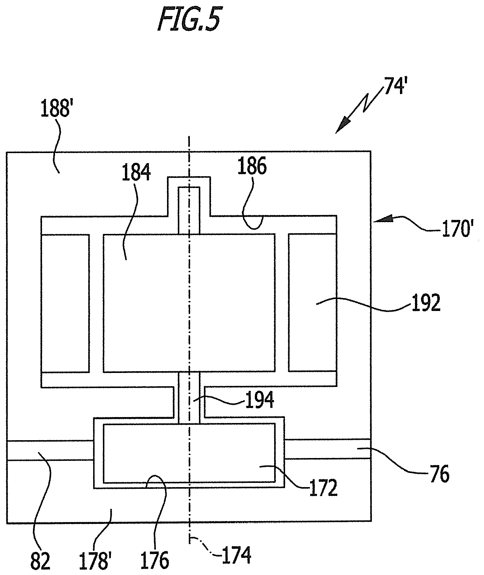

Bei einer Variante des zweiten Ausführungsbeispiels der als Rotationspumpe 170' ausgebildeten Pumpeinheit 74', dargestellt in Fig. 5, bilden das Pumpkammergehäuse 178' und das Motorgehäuse 188 eine hermetisch abgeschlossene Einheit, so dass der den Rotor 184 und den Stator 192 aufnehmende Innenraum 186 des Motorgehäuses 188 auf demselben Druckniveau liegen können wie die Pumpkammer 176.

In diesem Fall ist es daher auch möglich, das Pumpelement 172 mittels einer mechanischen Welle 194 mit dem Rotor 184 zu koppeln, so dass der Rotor 184 mit der Welle 194 und dem Pumpelement 172 eine drehfest miteinander verbundene und um die Achse 174 rotierende Einheit darstellen.

Somit ist auch bei diesem Ausführungsbeispiel die Möglichkeit gegeben, mit dem Pumpelement 172 auf einem sehr hohen Druckniveau, beispielsweise oberhalb von 15 bar, noch besser oberhalb von 20 bar und noch besser über 25 bar, ohne Leckageverluste aufgrund mechanischer Antriebsdurchführungen zu arbeiten.

Bezogen auf die maximale Fördermenge des Verdichters 12 beträgt bei allen voranstehenden Ausführungsbeispielen die bei der Zufuhreinheit 70 vorgesehene Fördermenge weniger als 100%, noch besser weniger als 50% und vorzugsweise weniger als 30%, dieser maximalen Fördermenge des Verdichters 12.

Bei beiden Ausführungsformen der erfindungsgemäßen Pumpeinheiten 74 und 74' erfolgt die Dimensionierung derselben so, dass die maximale Förderleistung einer derartigen Pumpeinheit 100 Liter pro Stunde oder weniger beträgt, so dass eine oder gegebenenfalls mehrere parallel arbeitende sehr klein bauende Pumpeinheiten mit geringer Leistungsaufnahme eingesetzt werden können.

Vorzugsweise liegt dabei die Förderleistung einer derartigen einzusetzenden Pumpeinheiten 74, 74' bei mindestens 0,3 Liter pro Stunde, noch besser mindestens 0,3 Liter pro Stunde oder mehr.

Ferner kann bei beiden Ausführungsformen der Pumpeinheiten 74, 74' mittels der Kältemittelzufuhrsteuereinheit 90 noch eine Regelung der Förderleistung der Pumpeinheiten 74, 74' erfolgen, so dass die Förderleistung der Pumpeinheiten 74, 74' der erforderlichen Kühlleistung in der Druckkammer 34 durch das zugeführte Kältemittel angepasst werden kann.

## Patentansprüche

1. Kühlkreislauf (10) umfassend
einen Kältemittelverdichter (12) mit einem Sauganschluss (66) und mit einer einen Druckanschluss (38) aufweisenden Druckkammer (34), einen im Kühlkreislauf (10) auf den Druckanschluss (38) folgend angeordneten Verflüssiger (44) mit einem Fluidsammelraum (46), in welchem sich ein Kältemittelvorrat (48) aus Kältemittel bildet,
einen im Kühlkreislauf (10) zwischen dem Verflüssiger (44) und dem Sauganschluss (66) liegenden Verdampfer (54), und
eine einerseits mit dem Kältemittelvorrat (48) und andererseits mit der Druckkammer (34) verbundene Zufuhreinheit (70) zur Zufuhr von Kältemittel aus dem Kältemittelvorrat (48) zu der Druckkammer (34), welche eine Pumpeinheit (74) für das Kältemittel umfasst,
wobei die Pumpeinheit (74) ein druckdicht abgeschlossenes und nur mit einem Einlass (76) sowie einem Auslass (82) als Zugänge versehenes Pumpkammergehäuse (154, 156, 178) aufweist, in dessen Pumpkammer (118, 176) ein zum Pumpen des Kältemittels bewegbares Pumpelement (112, 172) angeordnet ist, **dadurch gekennzeichnet, dass** das Pumpkammergehäuse (154, 156, 178) keinerlei mechanische Durchführung für einen Antrieb des Pumpelements (112, 172) aufweist, dass die Pumpkammer (118, 176) in einem druckdicht abgeschlossenen Pumpkammergehäuse (154, 156, 178) angeordnet ist und dass das Pumpelement (112, 172) über eine durch das Pumpkammergehäuse (154, 156) hindurch wirkende elektromagnetische Kraftwirkung angetrieben ist, welche Bewegungen des als Kolben (112) ausgebildeten Pumpelements in einer Oszillationsrichtung (114) durch einen außerhalb der Pumpkammer (118) angeordneten Elektromagnet (152) anregt, der über sein Magnetfeld auf den Kolben (112) derart einwirkt, dass dieser sich in der Oszillationsrichtung (114) oszillierend bewegt, oder dass das Pumpelement (172) über eine durch das Pumpkammergehäuse (178) hindurch wirkende magnetische Kraftwirkung angetrieben ist, wobei hierzu der Antrieb des Pumpelements (172) über magnetische
Kopplung zwischen einem Rotor (184) eines Antriebsmotors (182) erfolgt, dass der Rotor (184) koaxial zum Pumpelement (172) in einem Innenraum (186) eines Motorgehäuses (188) angeordnet ist, das sich an das Pumpkammergehäuse (178) anschließt, so dass die magnetische Wechselwirkung zwischen dem Rotor (184) und dem Pumpelement (172) durch das Motorgehäuse (188) und das Pumpkammergehäuse (178) hindurch erfolgt, und dass in dem Innenraum des Motorgehäuses (188) ein den Rotor (184) umschließender Stator (192) angeordnet ist, der die Drehbewegung des Rotors (184) bewirkt.

2. Kühlkreislauf nach Anspruch 1, **dadurch gekennzeichnet, dass** das Pumpelement als Kolben (112) ausgebildet ist, dass insbesondere der Kolben (112) als federbeaufschlagter Schwingkolben ausgebildet ist.

3. Kühlkreislauf nach Anspruch 1 oder 2, **dadurch gekennzeichnet, dass** das Pumpelement (172) als um eine Achse (174) rotierendes Pumpelement ausgebildet ist, dass insbesondere das rotierende Pumpelement (172) als Zahnrad einer Zahnradpumpe ausgebildet ist.

4. Kühlkreislauf nach einem der voranstehenden Ansprüche, **dadurch gekennzeichnet, dass** die Pumpeinheit (74) durch eine Kältemittelzufuhrsteuereinheit (90) angesteuert ist.

5. Kühlkreislauf nach einem der voranstehenden Ansprüche, **dadurch gekennzeichnet, dass** der Pumpeinheit (74) eine Gasabfuhreinheit (100) zugeordnet ist, welche ein gasförmiges Kältemittel aus der Zufuhreinheit (70) abführende Gasabfuhrleitung (102) aufweist, dass insbesondere die Gasabfuhrleitung (102) mit einem auf saugseitigem Druck liegenden Kältemittelpfad des Kühlkreislaufs (10) verbunden ist.

6. Kühlkreislauf nach Anspruch 5, **dadurch gekennzeichnet, dass** die Gasabfuhreinheit (100) mit einem zu einem Einlass (76) der Pumpeinheit (74) führenden Zuleitungsabschnitt (78) der Zufuhreinheit (70) verbunden ist.

7. Kühlkreislauf nach Anspruch 5 oder 6, **dadurch gekennzeichnet, dass** die Gasabfuhreinheit (100) mit einem von einem Auslass (82) der Pumpeinheit (74) zur Druckkammer (34) führenden Ableitungsabschnitt (84) der Zufuhreinheit (70) verbunden ist.

8. Kühlkreislauf nach einem der Ansprüche 5 bis 7, **dadurch gekennzeichnet, dass** der Gasabfuhreinheit (100) ein Schaltventil (104) zum Aktivieren und Deaktivieren derselben zugeordnet ist.

9. Kühlkreislauf nach einem der voranstehenden Ansprüche, **dadurch gekennzeichnet, dass** eine Kältemittelzufuhrsteuereinheit (90) das Schaltventil (104) der Gasabfuhreinheit (100) steuert, und zwar insbesondere so, dass vor oder bei einem Start der Pumpeinheit (74) während eines Zeitraums eine Gasabfuhr aus der Zufuhreinheit (70) erfolgt.

## Claims

1. Cooling circuit (10) comprising
a refrigerant compressor (12) incorporating a suction port (66) and a pressure chamber (34) incorporating a pressure port (38), a condenser (44) which is arranged in the cooling circuit (10) downstream of the pressure port (38) and comprises a fluid collecting chamber (46) in which a refrigerant reservoir (48) of refrigerant is formed, an evaporator (54) located in the cooling circuit (10) between the condenser (44) and the suction port (66), a feed unit (70) which is connected at one side to the refrigerant reservoir (48) and to the pressure chamber (34) at the other side and which serves for supplying refrigerant from the refrigerant reservoir (48) to the pressure chamber (34) and which incorporates a pumping unit (74) for the refrigerant, wherein the pumping unit (74) comprises a pressure-tight closed pumping chamber housing (154, 156, 178) which is provided with only one inlet (76) and one outlet (82) as access points, and in that a pumping element (112, 172) which is movable for pumping the refrigerant is arranged in the pumping chamber (118, 176) thereof, **characterized in that** the pumping element (112, 172) has no mechanical feed-through for a drive of the pumping element (112, 172), **in that** the pumping chamber (118, 176) is arranged in a pressure-tight closed pumping chamber housing (154, 156) and **in that** the pumping element (112, 172) is driven by an electromagnetic force that acts through the pumping chamber housing (154, 156) which, by means of an electromagnet (152) arranged outside the pumping chamber (118), excites movements in a direction of oscillation (114) of the pumping element configured as a piston (112), the electromagnet acting by means of its magnetic field on the piston (112) so that this moves in a reciprocating manner in the direction of oscillation (114) or **in that** the pumping element (172) is driven by a magnetic force acting through the pumping chamber housing (178), wherein for this purpose the drive of the pumping element (172) results from magnetic coupling between a rotor (184) of a drive motor (182), **in that** the rotor (184) is arranged coaxially to the pumping element (172) in an inner chamber (186) of a motor housing (188), that adjoins the pumping chamber housing (178), so that the magnetic interaction between the rotor (184) and the pumping element (172) occurs through the motor housing (188) and the pumping chamber housing (178), and **in that** in the inner chamber of the motor housing (188) there is arranged a stator (192) surrounding the rotor (184), the stator causing the rotary movement of the rotor (184).

2. A cooling circuit in accordance with Claim 1, **characterized in that** the pumping element is configured as a piston (112), **in that** in particular the piston (112) is configured as a spring-loaded reciprocating piston.

3. A cooling circuit in accordance with Claim 1 or 2, **characterized in that** the pumping element (172) is configured as a pumping element which rotates about an axis (174), **in that** in particular the rotary pumping element (172) is configured as a gear wheel of a gear pump.

4. A cooling circuit in accordance with any of the preceding Claims, **characterized in that** the pumping unit (74) is controlled by a refrigerant supply control unit (90).

5. A cooling circuit in accordance with any of the preceding Claims, **characterized in that** there is associated with the pumping unit (74) a gas discharge unit (100) which comprises a gas discharge line (102) for conducting away gaseous refrigerant from the feed unit (70), **in that** in particular the gas discharge line (102) is connected to a refrigerant path of the cooling circuit (10) which is at suction-side pressure.

6. A cooling circuit in accordance with Claim 5, **characterized in that** the gas discharge unit (100) is connected to a supply line section (78) of the feed unit (70) leading to an inlet (76) of the pumping unit (74).

7. A cooling circuit in accordance with Claim 5 or 6, **characterized in that** the gas discharge unit (100) is connected to a discharge line section (84) of the feed unit (70) leading from an outlet (82) of the pumping unit (74) to the pressure chamber (34).

8. A cooling circuit in accordance with any of the Claims 5 to 7, **characterized in that** an on-off valve (104) is associated with the gas discharge unit (100) for the purposes of activating and deactivating it.

9. A cooling circuit in accordance with any of the preceding Claims, **characterized in that** a refrigerant supply control unit (90) controls the on-off valve (104) of the gas discharge unit (100), namely, in particular in such a way that a gas discharge from the feed unit (70) is effected during a time period before starting or when starting the pumping unit (74).

## Revendications

1. Circuit de refroidissement (10) comprenant
un compresseur de réfrigérant (12) avec un raccord d'aspiration (66) et avec une chambre de pression (34) présentant un raccord de pression (38), un condenseur (44) disposé dans le circuit de refroidissement (10) à la suite du raccord de pression (38) avec une chambre de collecte de fluide (46), dans laquelle se forme une réserve de réfrigérant (48) composée de réfrigérant,
un évaporateur (54) situé dans le circuit de refroidissement (10) entre le condenseur (44) et le raccord d'aspiration (66), et
une unité d'amenée (70) reliée d'une part à la réserve de réfrigérant (48) et d'autre part à la chambre de pression (34) pour l'amenée de réfrigérant à partir de la réserve de réfrigérant (48) vers la chambre de pression (34), laquelle comprend une unité de pompage (74) pour le réfrigérant,
dans lequel
l'unité de pompage (74) présente un chambre de pompage (154, 156, 178) fermé de manière étanche à la pression et pourvu uniquement d'une entrée (76) ainsi que d'une sortie (82) en tant qu'accès, dans la chambre de pompage (118, 176) duquel est disposé un élément de pompage (112, 172) mobile pour le pompage du réfrigérant,
**caractérisé en ce que** le carter de chambre de pompage (154, 156, 178) ne présente pas de passage mécanique pour un entraînement de l'élément de pompage (112, 172), que la chambre de pompage (118, 176) est disposée dans un carter de chambre de pompage (154, 156, 178) fermé de manière étanche à la pression et que l'élément de pompage (112, 172) est entraîné par l'intermédiaire d'une action de force électromagnétique agissant à travers le carter de chambre de pompage (154, 156), laquelle suscite des mouvements de l'élément de pompage réalisé en tant que piston (112) dans une direction d'oscillation (114) par un électroaimant (152) disposé à l'extérieur de la chambre de pompage (118), qui agit par l'intermédiaire de son champ magnétique sur le piston (112), de telle sorte que celui-ci se déplace de manière oscillante dans la direction d'oscillation (114), ou que l'élément de pompage (172) est entraîné par l'intermédiaire d'une action de force magnétique agissant à travers le carter de chambre de pompage (178), dans lequel à cet effet l'entraînement de l'élément de pompage (172) s'effectue par l'intermédiaire d'un couplage magnétique entre un rotor (184) d'un moteur d'entraînement (182), que le rotor (184) est disposé de manière coaxiale par rapport à l'élément de pompage (172) dans un espace intérieur (186) d'un carter de moteur (188), qui se raccorde au carter de chambre de pompage (178), de sorte que l'interaction magnétique entre le rotor (184) et l'élément de pompage (172) s'effectue à travers le carter de moteur (188) et le carter de chambre de pompage (178), et qu'un stator (192) entourant le rotor (184) est disposé dans l'espace intérieur du carter de moteur (188), qui provoque le mouvement rotatif du rotor (184).

2. Circuit de refroidissement selon la revendication 1, **caractérisé en ce que** l'élément de pompage est réalisé en tant que piston (112), qu'en particulier le piston (112) est réalisé en tant que piston oscillant sollicité par un ressort.

3. Circuit de refroidissement selon la revendication 1 ou 2, **caractérisé en ce que** l'élément de pompage (172) est réalisé en tant qu'élément de pompage tournant autour d'un axe (174), qu'en particulier l'élément de pompage (172) rotatif est réalisé en tant que roue dentée d'une pompe à engrenages.

4. Circuit de refroidissement selon l'une quelconque des revendications précédentes, **caractérisé en ce que** l'unité de pompage (74) est commandée par une unité d'amenée de réfrigérant (90).

5. Circuit de refroidissement selon l'une quelconque des revendications précédentes, **caractérisé en ce qu'**une unité d'évacuation de gaz (100) est associée à l'unité de pompage (74), laquelle présente une conduite d'évacuation de gaz (102) évacuant un réfrigérant gazeux de l'unité d'amenée (70), qu'en particulier la conduite d'évacuation de gaz (102) est reliée à un trajet de réfrigérant du circuit de refroidissement (10) situé à la pression côté aspiration.

6. Circuit de refroidissement selon la revendication 5, **caractérisé en ce que** l'unité d'évacuation de gaz (100) est reliée à une partie d'alimentation (78) de l'unité d'amenée (70) menant à une entrée (76) de l'unité de pompage (74).

7. Circuit de refroidissement selon la revendication 5 ou 6, **caractérisé en ce que** l'unité d'évacuation de gaz (100) est reliée à une partie de dérivation (84) de l'unité d'amenée (70) menant d'une sortie (82) de l'unité de pompage (74) à la chambre de pression (34).

8. Circuit de refroidissement selon l'une quelconque des revendications 5 à 7, **caractérisé en ce qu'**une soupape de commutation (104) est associée à l'unité d'évacuation de gaz (100) pour activer et désactiver celle-ci.

9. Circuit de refroidissement selon l'une quelconque des revendications précédentes, **caractérisé en ce qu'**une unité de commande d'amenée de réfrigérant (90) commande la soupape de commutation (104) de l'unité d'évacuation de gaz (100), et ce, en particulier de sorte qu'avant ou lors d'un démarrage de l'unité de pompage (74) une évacuation de gaz de l'unité d'amenée (70) s'effectue pendant un laps de temps.
